# EUROPÄISCHE PATENTANMELDUNG

(11) **EP 2 290 302 A2**
(43) Veröffentlichungstag der Anmeldung: **02.03.2011**
(21) Anmeldenummer: 10450126.7
(22) Anmeldetag: 29.07.2010
(51) Int. Cl.: F24J 2/04, F24J 2/24, H01L 31/048

(54) **Gebäude mit Dach und auf dem Dach angeordneten Einrichtungen zum Umwandeln von Sonnenenergie**

(30) Priorität: 31.08.2009 AT 13622009
(71) Anmelder: Wolf Modul GmbH, 4644 Scharnstein (AT)
(72) Erfinder: Wolf, Johann, 9050 Appenzell (CH)
(74) Vertreter: Beer, Manfred

(57) **Zusammenfassung**

Ein Gebäude (1) besitzt ein Dach (2), das Dachflächen (3, 4) aufweist, die im Wesentlichen parallel zur Richtung der Sonneneinstrahlung (Pfeil 12) ausgerichtet sind. Auf diesen Dachflächen (3, 4) sind mehrere Einrichtungen (10) zum Umwandeln von Sonnenenergie in elektrische Energie und/oder in Wärmeenergie angeordnet. Die Einrichtungen (10) sind so ausgerichtet, dass ihre Wirkflächen (11) im Wesentlichen normal zur Sonneneinstrahlung (Pfeil 12) ausgerichtet sind. Dabei sind Wirkflächen (11) der Einrichtungen (10) parallel zum Gefälle (Pfeil 6) der Dachflächen (3, 4) ausgerichtet.

## Beschreibung

Die Erfindung betrifft ein Gebäude mit Dach und auf dem Dach angeordneten Einrichtungen zum Umwandeln von Sonnenenergie, welche Einrichtungen im Wesentlichen normal zur Einfallrichtung von Sonnenlicht ausgerichtete Wirkflächen haben.

Zunehmend werden Einrichtungen zum Umwandeln von Sonnenenergie in elektrische Energie oder in Wärme eingesetzt.

Für das Umwandeln von Sonnenenergie (Sonnenlicht) in elektrische Energie werden sogenannte "Solarzellen" oder "photovoltaische Zellen" eingesetzt. Diese Solarzellen sind elektrische Bauelemente, die im Licht (in der Regel Sonnenlicht) enthaltene Strahlungsenergie direkt in elektrische Energie umwandeln.

Physikalische Grundlage der Umwandlung ist der photovoltaische Effekt durch die photovoltaische Zelle, welche die Wirkfläche der als Solarzelle oder photovoltaische Zelle bezeichneten Einrichtung bildet.

Weiters sind Solarkollektoren (Sonnenkollektoren), bei denen die Sonnenenergie ein Wärmeübertragungsmedium (meist Heizwasser) aufheizt, bekannt. Wirkflächen dieser Solarkollektoren sind Kammern oder andere Hohlräume, wie Leitungen, Schläuche oder Rohre, durch welche das Übertragungsmedium strömt.

Um die Energie des Sonnenlichtes möglichst gut auszunutzen, werden die bekannten Einrichtungen (Solarzellen und Sonnenkollektoren) in der Regel so ausgerichtet, dass ihre Wirkfläche normal zu der Haupteinfallrichtung von Sonnenlicht ausgerichtet ist. Dies ist im europäischen Raum im Wesentlichen eine Richtung gegen Süden unter einem Winkel von annähernd 30° zur Horizontalen (Erdoberfläche).

Die US 4,498,459 A zeigt von einem flüssigen Wärmeträgermedium durchströmte Sonnenkollektoren auf der Außenseite einer Dachfläche, wobei die Ausgestaltung/Ausrichtung der Sonnenkollektoren offen gelassen ist.

Die JP 2006098027 A befasst sich mit der Kombination der Wärmegewinnung durch am Dach angebrachte Elemente in Form von luftdurchströmten Sonnenkollektoren und durch im Erdboden versenkte Wärmetauscher.

Die US 4,418,685 A zeigt eine auf dem Dach eines Hauses angebrachte Vorrichtung, die nach Art eines Sonnenkollektors arbeitet und zu beiden Seiten des Dachfirstes angebrachte Elemente aufweist, die sich aufheizen sollen, sodass heiße Luft von der Innenseite zu dem mit Abstand über dem Dach angeordneten und gewinkelt ausgebildeten Sonnenkollektor strömt.

Oft werden die oben genannten Einrichtungen zum Umwandeln von Sonnenenergie in elektrischen Strom oder in Wärme auf Gebäuden, insbesondere auf Dächern von Gebäuden, angebracht. Dabei ist man bestrebt, die Gebäude so auszurichten, dass wenigstens eine Fläche des Daches nach Süden weist, damit dort die Einrichtungen der hier in Betracht gezogenen Art angebracht werden können. Auf den der Sonneneinstrahlung abgekehrten Dachflächen (nach Norden weisend) werden solche Einrichtungen nicht angebracht, da sie dort mehr oder weniger wirkungslos sind.

Oft ist das Ausrichten des Gebäudes mit wenigstens einer zur hauptsächlichen Sonneneinstrahlrichtung hin weisenden Dachfläche (die zur Haupteinfallrichtung des Sonnenlichtes auch noch etwa normal stehen sollte) nicht möglich, wobei überdies die Ausrichtung des Gebäudes (des Dachfirstes) West-Ost oft unerwünscht ist.

Diese übliche Ausrichtung von Gebäuden mit Firsterstreckung senkrecht zur Haupteinfallrichtung von Sonnenlicht hat auch zur Folge, dass die andere Dachfläche, die dann von der Einfallrichtung von Sonnenlicht abgekehrt (z.B. nach Norden weisend) ausgerichtet ist, für das Anbringen von Sonnenenergie umwandelnden Einrichtungen ungeeignet ist, weil keine oder eine nur unter ungünstigem Winkel einfallende Sonneneinstrahlung vorliegt.

Der Erfindung liegt die Aufgabe zu Grunde, ein Gebäude der eingangs genannten Gattung vorzuschlagen, das die geschilderten Nachteile nicht aufweist.

Gelöst wird diese Aufgabe erfindungsgemäß mit einem Gebäude, das die Merkmale von Anspruch 1 aufweist.

Bevorzugte und vorteilhafte Ausgestaltungen der Erfindung sind Gegenstand der Unteransprüche.

Da bei der erfindungsgemäßen Ausbildung des Gebäudes die Einrichtungen (z.B. Solarmodule oder Solarpaneele mit photovoltaischen Zellen und/oder Solarkollektoren) so ausgerichtet sind, dass ihre Wirkflächen nicht nur normal zum Sonnenlicht, sondern auch parallel zum Gefälle (= parallel zur Falllinie) des Daches, an dem sie montiert sind, ausgerichtet sind, können die erfindungsgemäßen Einrichtungen auch senkrecht oder wenigstens im Wesentlichen senkrecht zur Haupteinfallrichtung von Sonnenlicht ausgerichtet werden, wenn die Fläche des Daches selbst nicht senkrecht zur Sonneneinstrahlung ausgerichtet ist, sondern in Richtung der Sonneneinstrahlung, also z.B. Nord-Süd, verläuft.

Wenn die Wirkflächen der Einrichtung langgestreckt ausgebildet sind, und die langgestreckten Wirkflächen der erfindungsgemäßen Einrichtungen parallel zur Falllinie (Neigung des Bereiches des Daches, auf dem die Einrichtungen angeordnet sind) ausgerichtet sind, ergibt sich eine besonders günstige und wirkungsvolle Anordnung.

Die Einrichtungen, die selbst länglich (also länger als breit) ausgebildet sein können, können aus mehreren photovoltaischen Zellen oder Solarkollektor-Elementen, die nebeneinander angeordnet sind, bestehende Wirkflächen aufweisen.

Die erfindungsgemäßen Einrichtungen bzw. deren Wirkflächen können auf dem Dach starr ausgerichtet sind, wobei der Winkel, unter dem diese Einrichtungen ausgerichtet sind, etwa normal zur Haupteinfallrichtung von Sonnenlicht ist. Alternativ können diese Einrichtungen, insbesondere deren Wirkflächen, oder wenigstens einzelne derselben auch neigbar sein, sodass ihr Winkel zur Dachebene geändert werden kann, um ihre Ausrichtung an eine sich im Laufe eines Tages oder jahreszeitlich ändernde Richtung der Sonneneinstrahlung anpassen zu können.

Die erfindungsgemäße Einrichtung kann auf allen gängigen Dachformen, wie Satteldach, Walmdach oder Pultdach, verwendet werden, wobei Satteldächer bevorzugt sind.

Die erfindungsgemäße Ausbildung des Gebäudes erlaubt es auch, auf einem Satteldach oder Walmdach auf beiden Hauptdachflächen gemäß der Erfindung ausgebildete Einrichtungen anzubringen, wenn das Gebäude so ausgerichtet ist, dass der First des Daches parallel zur Haupteinfallrichtung von Sonnenlicht, also beispielsweise Nord-Süd, verlaufend ausgerichtet ist.

Weitere Merkmale und Einzelheiten der Erfindung ergeben sich aus der nachstehenden Beschreibung bevorzugter Ausführungsbeispiele anhand der Zeichnungen.

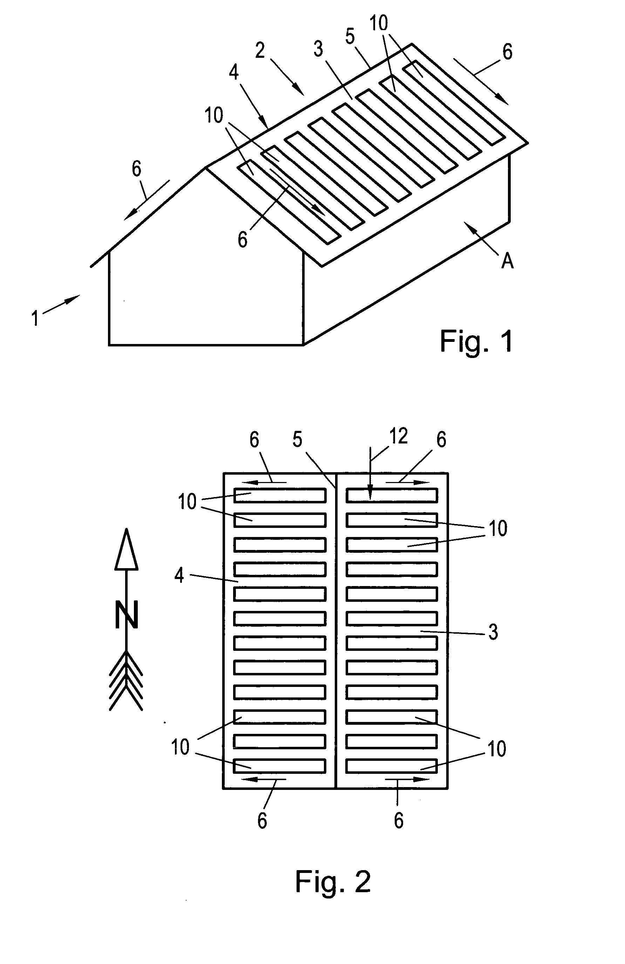

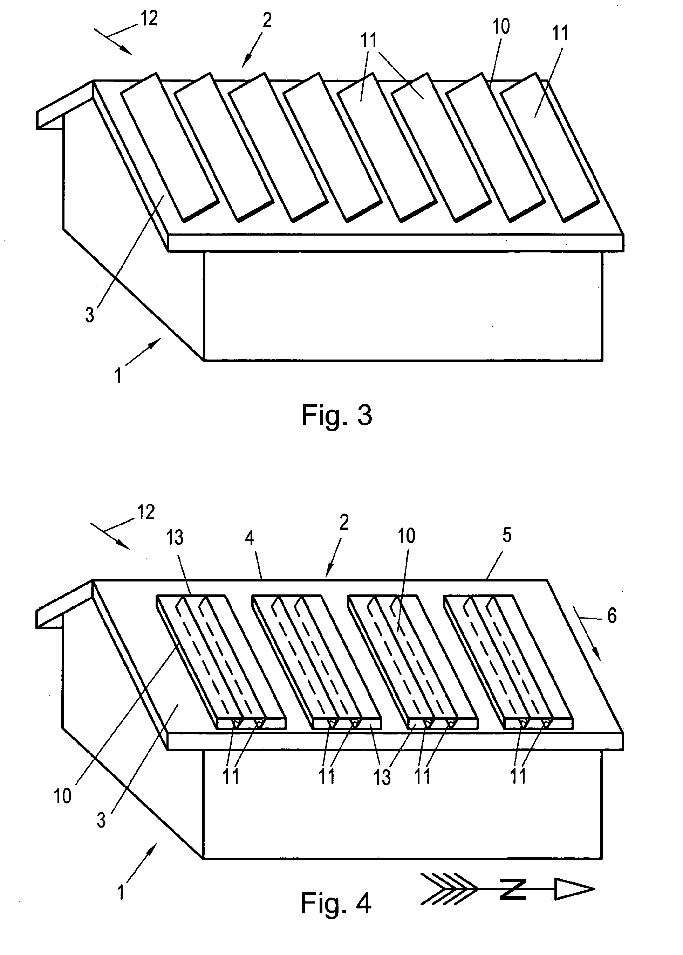

Es zeigt: Fig. 1 weitestgehend schematisiert ein erfindungsgemäßes Gebäude, Fig. 2 eine Draufsicht auf das Gebäude aus Fig. 1, Fig. 3 eine Einzelheit in einer ersten Ausführungsform und Fig. 4 eine Einzelheit in einer zweiten Ausführungsform jeweils in Schrägansicht.

Ein in Fig. 1 in Schrägansicht gezeigtes Gebäude 1 besitzt ein Dach 2, das im gezeigten Ausführungsbeispiel als Satteldach ausgebildet ist. Das Dach 2 besitzt zwei im Wesentlichen ebene, geneigte Dachflächen 3 und 4, die in einem First 5 zusammenlaufen. Die Dachflächen 3 und 4 besitzen Gefälle, was auch durch in Falllinie ausgerichtete Pfeile 6 veranschaulicht ist. Ausweislich Fig. 2 ist der First 5 des Daches des Gebäudes 1 so ausgerichtet, dass er parallel zur Haupteinfallrichtung von Sonnenlicht, z.B. parallel zur Nord-Süd-Richtung, ausgerichtet ist.

Auf beiden Dachflächen 3 und 4 sind Reihen von im Beispiel zueinander parallelen Einrichtungen 10 vorgesehen, mit welchen Sonnenenergie in Wärmeenergie oder elektrische Energie umgewandelt werden kann. Diese Einrichtungen 10 können Solarzellen oder Solarkollektoren der eingangs beschriebenen Bauart sein. Es ist auch denkbar, auf ein und demselben Gebäude 1 auf einer Dachfläche 3 Solarzellen und auf der anderen Dachfläche 4 Solarkollektoren anzuordnen. Freilich können auf einer Dachfläche 3 und/oder 4 auch Einrichtungen 10 in Form von Solarzellen und von Solarkollektoren angeordnet sein.

Die Einrichtungen 10 sind im Beispiel langgestreckt ausgebildet und parallel zum Gefälle (Falllinie, Pfeile 6) der Dachflächen 3 und 4 ausgerichtet. Insbesondere sind die Einrichtungen 10 auch parallel zueinander ausgerichtet. Die in den Einrichtungen 10 zum Umwandeln von Sonnenenergie wirksamen photovoltaischen Zellen und/oder Solarkollektor-Elemente haben im Beispiel ebenfalls eine langgestreckte Form, die insbesondere auch dadurch erreicht ist, dass in den Einrichtungen 10 nebeneinander zwei oder mehrere Zellen oder Elemente angeordnet sind.

Wie beispielsweise Fig. 3 zeigt, sind die Wirkflächen 11 der leistenförmigen Einrichtungen 10 zur Ebene der Dachfläche 3 unter einem spitzen Winkel schräggestellt, sodass die Ausrichtung ihrer Wirkflächen 11 (photovoltaische Elemente oder Solarzellen bzw. von Wärmeübertragungsmedium durchströmte Kammern oder Leitungen bei Solarkollektoren) im Wesentlichen normal zur Haupteinfallrichtung (Pfeil 14) von Sonnenlicht ausgerichtet sind.

Wenngleich in den Zeichnungen nicht im Einzelnen dargestellt, können die Einrichtungen 10, oder wenigstens deren Wirkflächen aufweisende Zellen oder Elemente, gegenüber der Dachfläche 3 auch in ihrer Neigung verstellbar sein, indem sie beispielsweise um Achsen verschwenkbar sind, die im Bereich der Dachfläche 3 liegen oder zum Gefälle (Pfeile 6) parallel sind.

Die Einrichtungen 10 sind auf den Dachflächen 3 und 4 so angeordnet, dass die (imaginären) Schnittlinien zwischen der Ebene ihrer Wirkflächen 11 und der Ebene der Dachflächen 3, 4 etwa senkrecht zur Haupteinfallrichtung von Sonnenlicht (Pfeil 12) ausgerichtet sind.

Das Gebäude bzw. die Dachfläche 3, 4, auf welcher Einrichtungen 10 vorgesehen sind, ist in einem bevorzugten Ausführungsbeispiel der Erfindung so ausgerichtet, dass die Schnittlinie der Dachfläche 3 mit einer imaginären, horizontalen Ebene (Spur der Dachfläche 3) im Wesentlichen parallel zur (hauptsächlichen) Einfallrichtung (Pfeil 12) von Sonnenlicht verlaufend ausgerichtet ist. Im Einzelnen kann dies bedeuten, dass der untere Rand der Dachfläche 3 und/oder 4 parallel zur Richtung (Pfeil 12) der Sonneneinstrahlung ausgerichtet ist.

Bei der in Fig. 3 gezeigten Ausführungsform sind die Dachflächen 3 und 4 im Wesentlichen eben (abgesehen von strukturierten Dacheindeckungen, wie Ziegel, Wellblech oder ähnliches) und die Einrichtungen 10 stehen von diesen Dachflächen 3 und 4 unter einem spitzen Winkel ab.

Bei der in Fig. 4 gezeigten Ausführungsform sind auf der Dachfläche 3 Einrichtungen 10 in Form flach auf den Dachflächen 3/4 aufliegender Gehäuse 13 vorgesehen. In diesen Gehäusen 13 sind die Solarzellen bzw. Solarkollektor-Elemente so untergebracht, dass die Wirkflächen 11 zur Sonneneinfallrichtung (Pfeil 12) im Wesentlichen normal stehen und ihre Längserstreckung parallel zum Gefälle (Pfeil 6) der Dachflächen 3/4 verläuft. Im Übrigen gelten für die Ausführungsform von Fig. 4 die Ausführungen zu Fig. 3, wobei auch hier eine Verschwenkbarkeit der Einrichtungen 10 und/oder der Wirkflächen 11 vorgesehen sein kann.

Zusammenfassend kann ein Ausführungsbeispiel der Erfindung wie folgt beschrieben werden:
Ein Gebäude 1 besitzt ein Dach 2, das Dachflächen 3, 4 aufweist, die im Wesentlichen parallel zur Richtung der Sonneneinstrahlung (Pfeil 12) ausgerichtet sind. Auf diesen Dachflächen 3, 4 sind mehrere Einrichtungen 10 zum Umwandeln von Sonnenenergie in elektrische Energie und/oder in Wärmeenergie angeordnet. Die Einrichtungen 10 sind so ausgerichtet, dass ihre Wirkflächen 11 im Wesentlichen normal zur Sonneneinstrahlung (Pfeil 12) ausgerichtet sind. Dabei sind Wirkflächen 11 der Einrichtungen 10 parallel zum Gefälle (Pfeil 6) der Dachflächen 3, 4 ausgerichtet.

## Patentansprüche

1. Gebäude (1) mit Dach (2) und auf dem Dach (2) angeordneten Einrichtungen (10) zum Umwandeln von Sonnenenergie, die im Wesentlichen normal zur Einfallrichtung (Pfeil 12) von Sonnenlicht ausgerichtete Wirkflächen (11) haben, **dadurch gekennzeichnet, dass** die Wirkflächen (11) der Einrichtungen (10) im Wesentlichen parallel zur Richtung des Gefälles (Pfeil 6) des wenigstens einen Bereiches (3, 4) des Daches (2), in dem die Einrichtungen (10) angeordnet sind, ausgerichtet sind, und dass die Wirkflächen (11) der Einrichtungen (10) zur Fläche des Bereiches des Daches (2), in dem die Einrichtungen (10) vorgesehen sind, schräg ausgerichtet, insbesondere unter einem spitzen Winkel ausgerichtet, sind.

2. Gebäude nach Anspruch 1, **dadurch gekennzeichnet, dass** die Wirkflächen (11) der Einrichtungen (10) als langgestreckte Streifen oder Leisten ausgebildet sind und dass die Längserstreckung der Wirkflächen (11) parallel zur Richtung des Gefälles (Pfeil 6) des Bereiches (3, 4) des Daches (2), in dem die Einrichtungen (10) angeordnet sind, ausgerichtet sind.

3. Gebäude nach Anspruch 1 oder 2, **dadurch gekennzeichnet, dass** die Ebenen, in denen die Wirkflächen (11) der Einrichtungen (10) liegen, zur Einfallrichtung (Pfeil 12) von Sonnenlicht im Wesentlichen senkrecht ausgerichtet sind.

4. Gebäude nach Anspruch 3, **dadurch gekennzeichnet, dass** die Schnittlinien zwischen den Ebenen der Wirkflächen (11) der Einrichtungen (10) und der Fläche des Bereiches (3, 4) des Daches (2), in dem die Einrichtungen (10) angeordnet sind, im Wesentlichen senkrecht zur Einfallrichtung (Pfeil 14) von Sonnenlicht stehen.

5. Gebäude nach Anspruch 3 oder 4, **dadurch gekennzeichnet, dass** die Wirkflächen (11) im Wesentlichen in Richtung "West-Ost" verlaufend ausgerichtet sind.

6. Gebäude nach einem der Ansprüche 1 bis 5, **dadurch gekennzeichnet, dass** der Bereich (3, 4) des Daches (2), in dem Einrichtungen (10) angeordnet sind, Schnittlinien mit Horizontalebenen hat, die im Wesentlichen parallel zur Einfallrichtung (Pfeil 12) von Sonnenlicht ausgerichtet sind.

7. Gebäude nach Anspruch 6, **dadurch gekennzeichnet, dass** die Schnittlinien im Wesentlichen "Nord-Süd" verlaufend ausgerichtet sind.

8. Gebäude nach einem der Ansprüche 1 bis 6, **dadurch gekennzeichnet, dass** die Außenfläche (3, 4) des Daches (2), wenigstens in dem Bereich, in dem Einrichtungen (10) vorgesehen sind, im Wesentlichen eben ist und dass die Einrichtungen (10) von der Außenfläche (3, 4) des Daches (2) abstehen.

9. Gebäude nach einem der Ansprüche 1 bis 8, **dadurch gekennzeichnet, dass** Einrichtungen (10) vorgesehen sind, die photovoltaische Zellen (Solarzellen) zum Umwandeln von Sonnenlicht in elektrische Energie sind.

10. Gebäude nach einem der Ansprüche 1 bis 8, **dadurch gekennzeichnet, dass** Einrichtungen (10) vorgesehen sind, die Sonnenkollektoren (Solarkollektoren) zum Erwärmen eines Übertragungsmediums, insbesondere Heizwasser, durch Sonnenlicht sind.
